# EUROPÄISCHE PATENTSCHRIFT

(11) **EP 0 971 830 B1**
(45) Veröffentlichungstag und Bekanntmachung des Hinweises auf die Patenterteilung: **04.10.2001**
(21) Anmeldenummer: 98928104.3
(22) Anmeldetag: 27.03.1998
(51) Int. Cl.: B60R 21/22

(54) **LENKRAD MIT AIRBAGMODUL**
STEERING WHEEL WITH AN AIR BAG MODULE
VOLANT AVEC MODULE D'AIRBAG

(30) Priorität: 03.04.1997 DE 19714898
(43) Veröffentlichungstag der Anmeldung: 19.01.2000
(73) Patentinhaber: Petri AG, 63743 Aschaffenburg (DE)
(72) Erfinder: BATTERMANN, Jens, D-13187 Berlin (DE); SAMARAE, Sami, Al, D-13187 Berlin (DE); KAMM, Martin, D-13469 Berlin (DE); REH, Stefan, D-63939 Wörth am Main (DE); ADOMEIT, Heinz-Dieter, D-10623 Berlin (DE)
(74) Vertreter: Baumgärtel, Gunnar, Dr.
(86) Internationale Anmeldenummer: DE9800922
(87) Internationale Veröffentlichungsnummer: WO9845145

(56) Entgegenhaltungen:
- DE-A- 19 607 193
- US-A- 3 322 386
- US-A- 3 801 123
- PATENT ABSTRACTS OF JAPAN vol. 95, no. 5, 30. Juni 1995 & JP 07 040800 A (MAZDA MOTOR), 10. Februar 1995

## Beschreibung

Die Erfindung betrifft ein Lenkrad nach dem Oberbegriff des Anspruchs 1. Ein solches Lenkrad ist zum Beispiel aus der US 3 801 123 A bekannt.

Lenkräder von Kraftfahrzeugen sind zum Schutz des Insassen im Crashfall im allgemeinen mit einem Airbag ausgerüstet. Der Airbag ist dabei in einem Airbagmodul in der Mitte des Lenkrades bezüglich der Längsachse der Lenksäule starr oder beweglich angeordnet. Dieser Fahrerairbag weist im aufgeblasenen Zustand eine symmetrische Form auf, damit er unabhängig von der Drehstellung des Lenkrades in gleicher Weise wirksam ist.

Der Nachteil der bekannten Fahrerairbags besteht darin, daß die symmetrische Form keinen optimalen Schutz für den Insassen bietet. Eine asymmetrische Form könnte zwar den Schutz bei einer bestimmten Stellung des Lenkrades, z.B. in der Geradeausstellung, verbessern, würde aber den Schutz in anderen Lenkradstellungen im Vergleich zu einem symmetrischen Airbag verschlechtern.

Ein weiterer Nachteil besteht darin, daß sich der Airbag abhängig vom Lenksäulenwinkel beim Crash schräg nach oben entfaltet. Dadurch wirkt der Airbag nicht mit seiner gesamten Fläche gleichmäßig auf den Körper des Insassen sondern bestimmte Körperregionen werden stärker belastet. Zur Vermeidung dieses Nachteils ist aus der DE 196 07 193 A1 bekannt, das Lenkrad nach unten zu kippen. Dabei ist das Lenkrad im oberen Bereich der Nabe gelenkig befestigt und kann bei einem Crash durch eine pyrotechnische Vorrichtung nach unten weggedreht werden. Dadurch wird die Lenkradkranzebene annähernd parallel zum Körper des Insassen gestellt. Der Airbag entfaltet sich dann in eine Richtung, die der waagerechten Richtung angenähert ist und der Insasse wird durch den Airbag gleichmäßiger belastet. Gleichzeitig wird auch die Gefahr der Verletzung durch den unteren Bereich des Lenkradkranzes verringert.

Der Nachteil dieses abkippbaren Lenkrades besteht darin, daß für das Kippen des Lenkrades im Fall eines Crashs eine pyrotechnische Vorrichtung mit der zugehörigen Elektronik erforderlich ist.

Aus der US 3,801,123 A ist eine Airbageinheit in einem Lenkrad bekannt, die ein drehbar am oberen Ende der Lenksäule befestigtes Gehäuse umfaßt, wobei die drehbare Befestigung über ein Kugellager erfolgt. Durch ein exzentrisch angeordnetes Gewicht wird die Position des Gehäuses mit dem darin untergebrachten Gassack unabhängig von der Drehstellung des Lenkrades festgelegt, so daß auch der aufgeblasene Gassack immer gleich ausgerichtet ist.

Der Erfindung liegt die Aufgabe zugrunde, das Lenkrad so zu verändern, daß ein verbesserter Schutz des Insassen unabhängig von der Stellung des Lenkrades ohne eine aufwendige Zusatzeinrichtung ermöglicht wird.

Bei einem Lenkrad mit Nabe, Speichen, Lenkradkranz und Airbagmodul ist erfindungsgemäß auf der Lenkradnabe oder in der zugeordneten Lenksäule ein drehbar gelagertes Bauteil für die Aufnahme mindestens einer weiteren Baugruppe befestigt, wobei der Schwerpunkt des Bauteils und/oder der weiteren Baugruppe so exzentrisch liegt, daß das drehbar gelagerte Bauteil bei Drehung des Lenkrades in seiner Lage bleibt, die es bei Geradeausstellung des Lenkrades einnimmt, und wobei an dem drehbar gelagerten Bauteil ein Verformungselement vorgesehen ist, das sich in Richtung des Lenkradskranzes erstreckt und das an einem Bereich des Bauteils befestigt ist, der oberhalb der Drehachse des Bauteils liegt.

Die Drehachse des drehbar gelagerten Bauteils verläuft vorzugsweise so, daß sie mit der Längsachse der Lenksäule für die Aufnahme des Lenkrades übereinstimmt. Der Schwerpunkt des drehbaren Bauteils liegt deshalb unterhalb der schräg nach oben verlaufenden Längsachse und bleibt bei Drehung des Lenkrades auch dort.

In einer Ausführungsform ist auf dem drehbar gelagerten Bauteil ein Gewicht mit kreisförmiger Grundfläche angeordnet, dessen Schwerpunkt außerhalb der Drehachse liegt. Diese Lage des Schwerpunktes kann z.B. durch eine einseitige, sich nach außen erstreckende Verbreiterung oder einen Abschnitt geringeren Durchmessers erreicht werden. Das Gewicht kann aber jede beliebige Form aufweisen, bei der der Schwerpunkt außerhalb der Drehachse des drehbaren Bauteils liegt.

Um mit dem drehbar gelagerten Bauteil Baugruppen für die Erhöhung der Sicherheit des Fahrers im Crashfall verbinden zu können ist es zweckmäßig , daß das drehbar gelagerte Bauteil und das Gewicht plattenförmig sind.

Ein Lenkrad mit den im Anspruch 1 definierten Merkmalen führt zu eine Erhöhung der Sicherheit des Fahrers. Das Verformungselement bleibt bei Drehung des Lenkrades immer oberhalb der Längsachse. Es wurde nun überraschend gefunden, daß im Crashfall ein durch den Fahrer bewirkte relativ geringe Verformung des Verformungselementes und dadurch bewirktes geringfügiges Einknicken des Lenkrades oberhalb der Längsachse der Lenksäule bei entsprechender Dimensionierung der Speichen zu einem starken Einknicken des Lenkrades unterhalb der Längsachse führt. Dadurch verläuft die Lenkradkranzebene nicht mehr schräg bezüglich des Fahrers sondern zumindest annähernd parallel zu dessen Körper. Dadurch positioniert sich der Airbag während der Belastungsphase nahezu parallel zum Thorax des Fahrers, so daß dieser gleichzeitig durch die gesamte Vorderfläche des Airbags belastet wird. Die spezifische Flächenbelastung und damit die Gefahr der Verletzung des Fahrers durch den Airbag wird damit geringer. Die biomechanisch richtige Positionierung des Airbags ist in allen Fällen gewährleistet und er kann zu keinem Zeitpunkt vom Fahrer weggeschoben werden. Ein weiterer Vorteil besteht darin, daß außer durch den Airbag auch durch das sich verformende Lenkrad Energie absorbiert wird.

Eine weitere Möglichkeit zur Verbesserung des Schutzes des Fahrers besteht darin, daß am Lenkrad ein Zwischenring vorgesehen ist, der einerseits über Nabenspeichen mit der Lenkradnabe und andererseits über Kranzspeichen mit dem Lenkradkranz verbunden ist, wobei zumindest die Nabenspeichen im Crashfall verformbar sind. Diese Aufteilung in Naben- und Kranzspeichen ermöglicht es, beide an unterschiedlichen Stellen anzuordnen. In einer Ausführungsform sind vier symmetrisch angeordnete, den gleichen Winkelabstand zueinander aufweisende Nabenspeichen vorgesehen, und es sind vier symmetrisch angeordnete Kranzspeichen angeordnet, von denen in der Lenkraddraufsicht und in der Geradeausstellung des Lenkrades zwei im unteren Lenkkranzbereich zumindest etwa den gleichen Verlauf wie die Nabenspeichen aufweisen, und die anderen zwei im oberen Lenkradbereich flacher als die Nabenspeichen verlaufen.

Die Anordnung der Speichen im gleichen Winkelabstand wäre aus Festigkeitsgründen generell anzustreben. Wegen der erforderlichen Durchsicht auf die Instrumente der Instrumententafel ist eine solche Anordnung aber in der Praxis nicht vorgesehen. Mit der Zweiteilung der Speichen ist der gleiche Winkelabstand aber nun im Nabenteil möglich.

In einer weiteren Ausführungsform sind der Zwischenring und das Verformungselement miteinander kombiniert. So ist vorgesehen, daß dem Zwischenring das in Richtung des Lenkradkranzes weisende Ende des Verformungselementes zugeordnet ist, wobei beide berührungslos miteinander im Eingriff sind. Das in Richtung des Lenkradkranzes weisende Ende des Verformungselementes weist vorzugsweise die Form einer Gabel auf, in die ein Rand des Zwischenringes eingreift.

Der Zwischenring und das Verformungselement berühren sich im Normalfall nicht, d.h. bei Drehung des Lenkrades bleibt das drehbar gelagerte Bauteil in seiner Position, die es auch bei Geradeausstellung des Lenkrades einnimmt. Erst im Crashfall wird der Zwischenring gegen das Verformungsteil gedrückt und führt zu dessen Verformung.

Es ist zweckmäßig, daß sich die Nabenspeichen zwischen der Lenkradnabe und dem Zwischenring in Form eines L-Winkels erstrecken.

In einer weiteren Ausgestaltung der Erfindung ist vorgesehen, daß das Airbagmodul auf dem drehbar gelagerten Bauteil oder dem Gewicht befestigt ist. Diese Anordnung ermöglicht erstmalig eine von der Kreisform abweichende Aufprallflläche des Airbags, wie sie für Beifahrerairbags bekannt ist, da sich das Airbagmodul bei Anbringung auf dem drehbar gelagerten Bauteil oder auf dem mit ihm verbundenen Gewicht bei Drehung des Lenkrades nicht mitdreht. Der Airbag kann also wie der Beifahrerairbag nunmehr eine Form erhalten, die einen größeren Schutz bietet als ein Airbag mit kreisförmiger Aufprallfläche.

Das drehbar gelagerte Bauteil ist zweckmäßig in einem Wälzlager gelagert, um eine leichte Beweglichkeit zu gewährleisten. Weiterhin ist es zweckmäßig, daß das drehbar gelagerte Bauteil mindestens eine Kralle aufweist, die unter eine ringförmigen Vorsprung der Lenkradnabe greift. Diese Krallen sollen dem drehbar gelagerten Bauteil bei der Verformung des Verformungselementes im Crashfall einen zusätzlichen Halt geben.

Bei einer weiteren Ausgestaltung besteht die Lenkradnabe aus einem Unter- und einem Oberteil, zwischen denen die Nabenspeichen befestigt sind.

In einer weiteren Ausführungsform ist vorgesehen, daß der mit der Lenkradnabe verbundene Abschnitt des Lagers für das drehbar gelagerte Bauteil über mindestens ein Federelement mit der Lenkradnabe verbunden ist oder daß das Gewicht über mindestens ein Federelement mit dem drehbar gelagerten Bauteil verbunden ist. Durch das federnde Verbinden dieser Bauteile miteinander werden störende Schwingungen des Lenkrades kompensiert. Die für das Kompensieren der Schwingungen bei bekannten Lenkrädern vorgesehenen zusätzlichen, federnd mit dem Lenkrad verbundenen Gewichte können dadurch entfallen.

Die Erfindung soll in Ausführungsbeispielen anhand von Zeichnungen erläutert werden. Es zeigen:

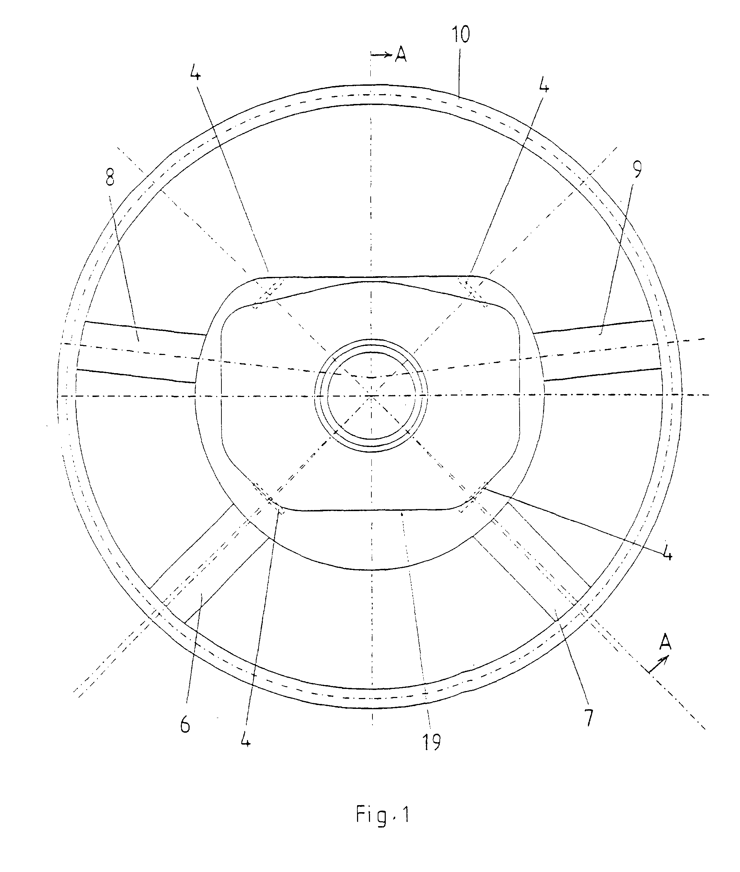

- Fig. 1: eine Draufsicht auf ein Lenkrad;
- Fig. 2: einen Schnitt durch das Lenkrad der Fig. 1 in Richtung der Pfeile A -A;
- Fig. 3: ausschnittsweise die Lagerung einer Drehplatte unter Verwendung federnder Elemente;
- Fig. 4: ein auf der Drehplatte befestigtes Gewicht in einer Ansicht von unten.

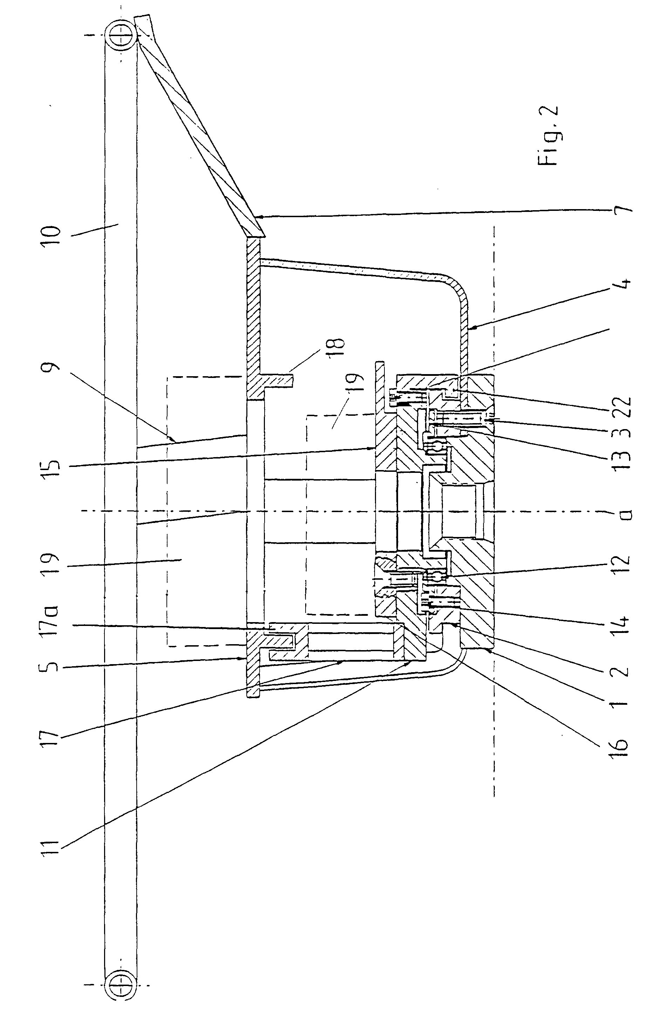

Das dargestellte Lenkrad weist eine Lenkradnabe auf, die aus einem Nabenunterteil 1 und einem Nabenoberteil 2 besteht, die mittels Senkschrauben 3 miteinander verbunden sind. Zwischen beide Nabenteile greifen vier Nabenspeichen 4, die zunächst in Ausnehmungen des Nabenunterteils 1 eingelegt werden und beim Zusammenbau der Nabenteile geklemmt werden. Anschließend werden sie mit der Nabe verschweißt. Die Nabenspeichen sind im Winkelabstand von 90° zueinander angeordnet und weisen, wie aus Fig. 2 ersichtlich ist, annähernd die Form eines L-Winkels auf. Die Nabenspeichen tragen an ihrem oberen Ende einen Zwischenring 5. An diesem Zwischenring sind vier Kranzspeichen 6 bis 9 befestigt, die einen Lenkradkranz 10 tragen. Dabei verlaufen die unteren Kranzspeichen 6 und 7, die auch als Bauchkranzspeichen bezeichnet werden, in Richtung der unteren Nabenspeichen 4. Die oberen Kranzspeichen 8 und 9, die auch als Brustkranzspeichen bezeichnet werden, verlaufen dagegen flacher als die oberen Nabenspeichen 4, so daß der freie Durchblick zur Armaturentafel gewährleistet ist.

Auf der Lenkradnabe ist als drehbar gelagertes Bauteil eine Drehplatte 11 vorgesehen, die auf einem Wälzlager 12 gelagert ist. Das Lager sitzt vorzugsweise mit einer Preßpassung auf der Drehplatte und ist mittels eines Lagerringes 13 und Schrauben 14 mit dem Nabenoberteil 2 verbunden.

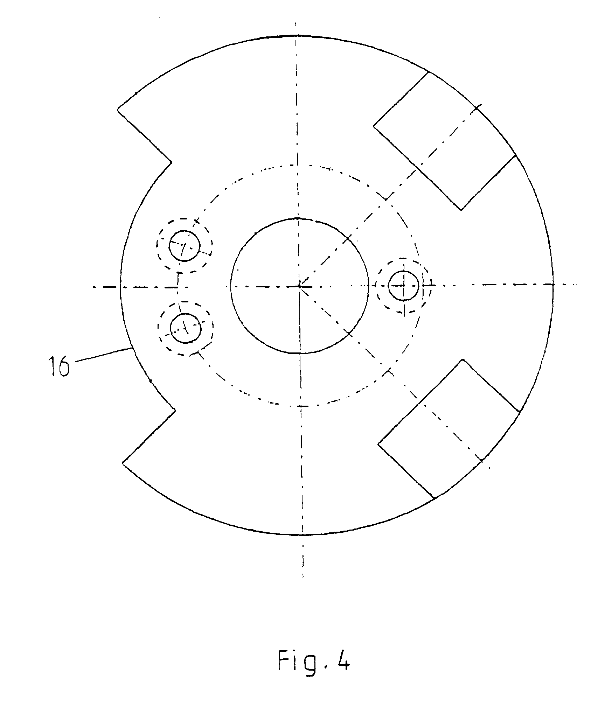

Auf der Drehplatte 11 ist ein plattenförmiges Gewicht 15 befestigt, dessen Schwerpunkt außerhalb der Drehachse liegt. Das wird im vorliegenden Fall dadurch erreicht, daß das Gewicht 15 einen Abschnitt 16 mit geringerem Durchmesser aufweist, wie es aus der Fig. 4 erkennbar ist. Die in der Fig. 2 rechts dargestellte Seite stellt das Unterteil des Lenkrades dar. In dieser Stellung bleibt das Gewicht und damit die Drehplatte auch bei Drehung des Lenkrades.

Auf der in Fig. 2 links dargestellten Seite des Lenkrades, die das Oberteil des Lenkrades darstellt, ist an der Drehplatte 11 ein Verformungselement 17 befestigt, das sich von dort in Richtung des Zwischenringes 5 erstreckt. Das Ende des Verformungselementes, das sich entlang des Zwischenringes 5 erstreckt, weist die Form einer Gabel 17a auf, in die sich ein ringförmiger Rand 18 des Zwischenringes 5 hinein erstreckt, ohne jedoch das Verformungselement zu berühren. Unabhängig von der Drehung des Lenkrades mit der Zwischenplatte 5 bleibt das Verformungselement in seiner dargestellten Position oberhalb der Längsachse a der Lenkspindel. Um der Drehplatte 11 bei Verformung des Verformungselementes 17 ausreichend Halt zu geben, sind an der Drehplatte 11 noch zwei Krallen 22 befestigt, die unter den äußeren Rand des Nabenoberteils 2 greifen. In der Fig. 2 ist nur eine Kralle erkennbar.

Im Crashfall wird der Rand 18 des Zwischenringes 5 gegen das Verformungselement 17 gedrückt, wobei dieses sich in Richtung der Drehplatte 11 um einen gewissen Betrag verformt. Wie aus Versuchen ermittelt wurde, wird nach einer gewissen Verformung des Verformungselementes 17 der in der Fig. 2 rechts dargestellte untere Bereich des Lenkrades durch Verformung der unteren Nabenspeichen 4 eingedrückt. Die Ebene des Lenkradkranzes 10 wird damit zumindest annähernd parallel zum Körper des Fahrers gedreht.

Ein Airbagmodul 19 kann in bekannter Weise fest mit dem Lenkrad verbunden sein, indem es auf dem Zwischenring 5 angeordnet ist. In diesem Fall wird es bei Drehung des Lenkrades mitgedreht. Es kann aber auch auf dem Gewicht 15 und damit auf der Drehplatte 11 befestigt sein, so daß es bei Drehung des Lenkrades in seiner Lage verharrt. Bei dieser letzgenannten Ausführung kann deshalb die Form des Airbags von der üblichen kreisrunden Form des Airbags abweichen, und der Schutz für den Fahrer dadurch optimiert werden.

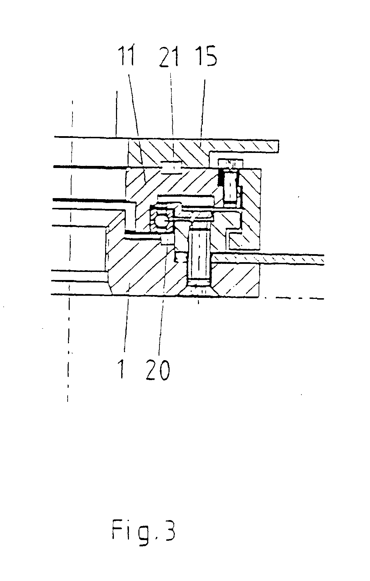

Während in der Ausführungsform der Fig. 2 die Drehplatte mit der Nabe und dem Gewicht starr miteinander verbunden sind, erfolgt bei der Ausführungsform der Fig. 3 die Verbindung zwischen der Drehplatte 11 und dem Nabenunterteil 1 oder dem Gewicht 15 über federnde Elemente 20 bzw. 21. Die ohnehin vorhandene Drehplatte 11 wird so gleichzeitig als Zusatzgewicht für die Kompensation der am Lenkrad auftretenden Schwingungen genutzt. Weitere Zusatzgewichte, wie sie bei herkömmlichen Lenkrädern zur Schwingungskompensations verwendet werden, sind deshalb überflüssig.

## Patentansprüche

1. Lenkrad mit Nabe, Speichen, Lenkradkranz (10) und Airbagmodul (19), wobei auf der Lenkradnabe (1,2) oder in der zugeordneten Lenksäule ein drehbar gelagertes Bauteil (11) für die Aufnahme mindestens einer weiteren Baugruppe befestigt ist, wobei der Schwerpunkt des Bauteils (11) und/oder der weiteren Baugruppe so exzentrisch liegt, daß das drehbar gelagerte Bauteil (11) bei Drehung des Lenkrades in seiner Lage bleibt, die es bei Geradeausstellung des Lenkrades einnimmt
**dadurch gekennzeichnet,**
**daß** an dem drehbar gelagerten Bauteil (11) ein Verformungselement (17) vorgesehen ist, das sich in Richtung des Lenkradkranzes (10) erstreckt und das an einem Bereich des Bauteils (11) befestigt ist, der oberhalb der Drehachse des Bauteils (11) liegt.

2. Lenkrad nach Anspruch 1, **dadurch gekennzeichnet, daß** die Drehachse des drehbar gelagerten Bauteils mit der Längsachse (a) der Lenksäule für die Aufnahme des Lenkrades übereinstimmt.

3. Lenkrad nach Anspruch 1, **dadurch gekennzeichnet, daß** auf dem drehbar gelagerten Bauteil (11) ein Gewicht (15) angeordnet ist, dessen Schwerpunkt außerhalb der Drehachse liegt.

4. Lenkrad nach mindestens einem der vorhergehenden Ansprüche, **dadurch gekennzeichnet, daß** das drehbar gelagerte Bauteil (11) und das Gewicht (15) plattenförmig sind.

5. Lenkrad nach mindestens einem der vorhergehenden Ansprüche, **dadurch gekennzeichnet, daß** das Verformungselement (17) im Crashfall durch ein Bauteil des Lenkrades vom Fahrer weg verformbar ist.

6. Lenkrad mit Nabe, Speichen, Lenkradkranz und Airbagmodul, nach mindestens einem der vorhergehenden Ansprüche, **dadurch gekennzeichnet, daß** ein Zwischenring (5) vorgesehen ist, der einerseits über Nabenspeichen (4) mit der Lenkradnabe und andererseits über Kranzspeichen (6 - 9) mit dem Lenkradkranz (10) verbunden ist, wobei zumindest die unteren Nabenspeichen (4) im Crashfall verformbar sind.

7. Lenkrad nach Anspruch 5 oder 6, **dadurch gekennzeichnet, daß** dem Zwischenring (5) das in Richtung des Lenkradkranzes (10) weisende Ende des Verformungselementes (17) zugeordnet ist, wobei beide berührungslos miteinander im Eingriff sind.

8. Lenkrad nach mindestens einem der Ansprüche 5 bis 7, **dadurch gekennzeichnet, daß** das in Richtung des Lenkradkranzes (10) weisende Ende des Verformungselementes (17) die Form einer Gabel (17a) aufweist, in die ein Rand (18) des Zwischenringes (5) eingreift.

9. Lenkrad nach mindestens einem der Ansprüche 5 bis 8, **dadurch gekennzeichnet, daß** vier symmetrisch angeordnete, den gleichen Winkelabstand zueinander aufweisende Nabenspeichen (4) vorgesehen sind, und **daß** vier symmetrisch angeordnete Kranzspeichen (6 -9) angeordnet sind, von denen in der Lenkraddraufsicht und in der Geradeausstellung des Lenkrades zwei (6, 7) im unteren Lenkkranzbereich zumindest etwa den gleichen Verlauf wie die Nabenspeichen (4) aufweisen, und die anderen zwei (8, 9) im oberen Lenkradbereich flacher als die Nabenspeichen verlaufen.

10. Lenkrad nach mindestens einem der Ansprüche 5 bis 9, **dadurch gekennzeichnet, daß** sich die Nabenspeichen ((4) zwischen der Lenkradnabe (1, 2) und dem Zwischenring (5) in Form eines L-Winkels erstrekken.

11. Lenkrad nach mindestens einem der vorhergehenden Ansprüche, **dadurch gekennzeichnet, daß** das Airbagmodul (19) auf dem drehbar gelagerten Bauteil (11) oder dem Gewicht (15) befestigt ist.

12. Lenkrad nach mindestens einem der vorhergehenden Ansprüche, **dadurch gekennzeichnet, daß** das drehbar gelagerte Bauteil (11) in einem Wälzlager (12) gelagert ist.

13. Lenkrad nach mindestens einem der vorhergehdnen Ansprüche, **dadurch gekennzeichnet, daß** das drehbar gelagerte Bauteil (11) mindestens eine Kralle aufweist (22), die unter einen ringförmigen Vorsprung der Lenkradnabe greifen.

14. Lenkrad nach mindestens einem der vorhergehenden Ansprüche, **dadurch gekennzeichnet, daß** die Lenkradnabe aus einem Unter- und einem Oberteil (1, 2) besteht, zwischen denen die Nabenspeichen (4) befestigt sind.

15. Lenkrad nach mindestens einem der vorhergehenden Ansprüche, **dadurch gekennzeichnet, daß** der mit der Lenkradnabe (1, 2) verbundene Abschnitt des Lagers für das drehbar gelagerte Bauteil (11) über mindestens ein federndes Element (20) mit der Lenkradnabe verbunden ist.

16. Lenkrad nach mindestens einem der vorhergehenden Ansprüche, **dadurch gekennzeichnet, daß** das Gewicht (15) über mindestens ein federndes Element (21) mit dem drehbar gelagerten Bauteil (11) verbunden ist.

## Claims

1. Steering wheel with hub, spokes, steering wheel rim (10) and airbag module (19) wherein a rotary journalled component part (11) for holding at least a further subassembly is fixed on the steering wheel hub (1, 2) or in the associated steering column, whereby the centre of gravity of the component part (11) and/or of the further subassembly is eccentrically mounted so that the rotary mounted component part (11). during rotation of the steering wheel remains in that position which it occupies when the steering wheel is in the straight ahead position
**characterised in that**
a deformable element (17) is provided on the rotary mounted component part (11) and extends in the direction of the steering wheel rim (10) and is fixed on an area of the component part (11) which lies above the rotary axis of the component part (11).

2. Steering wheel according to claim 1 **characterised in that** the rotary axis of the rotary mounted component part coincides with the longitudinal axis (a) of the steering column for holding the steering wheel.

3. Steering wheel according to claim 1 **characterised in that** a weight (15) is mounted on the rotary mounted component part (11) and its centre of gravity lies outside the rotary axis.

4. Steering wheel according to at least one of the preceding claims **characterised in that** the rotary mounted component part (11) and the weight (15) are plate-shaped.

5. Steering wheel according to at least one of the preceding claims **characterised in that** in the event of a crash the deformable element (17) is deformable away from the driver through a component part of the steering wheel.

6. Steering wheel with hub, spokes, steering wheel rim and airbag module, according to at least one of the preceding claims, **characterised in that** an intermediate ring (5) is provided which is connected on one side through hub spokes (4) to the steering wheel hub and on the other side through rim spokes ( 6 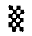 9) to the steering wheel rim (10) wherein at least the lower hub spokes (4) are deformable in the event of a crash.

7. Steering wheel according to claim 5 or 6 **characterised in that** the end of the deformable element (17) pointing in the direction of the steering wheel rim (10) is associated with the intermediate ring (5) whereby the two are in engagement with each other without contact.

8. Steering wheel according to at least one of claims 5 to 7 **characterised in that** the end of the deformable element (17) pointing in the direction of the steering wheel rim (10) has the shape of a fork (17a) in which an edge (18) of the intermediate ring (5) engages.

9. Steering wheel according to at least one of claims 5 to 8 **characterised in that** four symmetrically arranged hub spokes (4) having the same angular spacing from each other are provided, and that four symmetrically arranged rim spokes (6 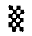 9) are provided of which in the plan view of the steering wheel and with the steering wheel in the straight position two (6,7) in the lower area of the steering rim have at least approximately the same path as the hub spokes (4) and the other two (8,9) in the upper area of the steering wheel run flatter than the hub spokes.

10. Steering wheel according to at least one of claims 5 to 9 **characterised in that** the hub spokes (4) between the steering wheel hub (1, 2) and the intermediate ring (5) extend in the form of an L-shaped angle.

11. Steering wheel according to at least one of the preceding claims **characterised in that** the airbag module (19) is fixed on the rotary mounted component part (11) or the weight (15).

12. Steering wheel according to at least one of the preceding claims **characterised in that** the rotary mounted component part (11) is mounted in a rolling bearing (12).

13. Steering wheel according to at least one of the preceding claims **characterised in that** the rotary mounted component part (11) has at least one claw (22) which engages under a ring-shaped projection of the steering wheel hub.

14. Steering wheel according to at least one of the preceding claims **characterised in that** the steering wheel hub consists of a lower and upper part (1,2) between which the hub spokes (4) are fixed.

15. Steering wheel according to at least one of the preceding claims **characterised in that** the section of the bearing connected to the steering wheel hub (1, 2) for the rotary mounted component part (11) is connected to the steering wheel hub through at least one resilient element (20).

16. Steering wheel according to at least one of the preceding claims **characterised in that** the weight (15) is connected to the rotary mounted component part (11) through at least one resilient element (21).

## Revendications

1. Volant, comprenant un moyeu, des rayons, une couronne (10) et un module à coussin gonflable (19), dans lequel un composant (11) monté avec faculté de rotation et destiné à la réception d'au moins un autre groupe structurel est fixé sur le moyeu (1, 2) ou dans la colonne de direction associée, le centre de gravité du composant (11) et/ou de l'autre groupe structurel étant disposé de manière excentrique de telle sorte que le composant (11) monté en rotation reste, lors de la rotation du volant, dans la position qu'il occupe lorsque le volant est orienté en ligne droite ;
**caractérisé en ce qu'**il est prévu un élément de déformation (17) sur le composant (11) monté en rotation, ledit élément de déformation s'étendant en direction de la couronne (10) du volant et étant fixé sur une zone du composant (11) située au-dessus de l'axe de rotation du composant (11).

2. Volant selon la revendication 1, **caractérisé en ce que** l'axe de rotation du composant monté en rotation coïncide avec l'axe longitudinal (a) de la colonne de direction pour la réception du volant.

3. Volant selon la revendication 1, **caractérisé en ce qu'**un poids (15) est agencé sur le composant (11) monté en rotation, dont le centre de gravité est disposé à l'extérieur de l'axe de rotation.

4. Volant selon l'une au moins des revendications précédentes,
**caractérisé en ce que** le composant (11) monté en rotation et le poids (15) sont sous forme de plaques.

5. Volant selon l'une au moins des revendications précédentes,
**caractérisé en ce que** l'élément de déformation (17) est susceptible de se déformer en cas d'accident en éloignement du conducteur à l'aide d'un composant du volant.

6. Volant, comprenant un moyeu, des rayons, une couronne et un module à coussin gonflable, selon l'une au moins des revendications précédentes, **caractérisé en ce qu'**il est prévu une bague intermédiaire (5) reliée au moyeu de volant d'une part par l'intermédiaire de rayons de moyeu (4) et à la couronne (10) d'autre part par l'intermédiaire de rayons de couronne (6-9), et **en ce que** les rayons de moyeu inférieurs (4) au moins sont déformables en cas d'accident.

7. Volant selon l'une ou l'autre des revendications 5 et 6, **caractérisé en ce qu'**une extrémité de l'élément de déformation (17), tournée en direction de la couronne de volant (10), est associée à la bague intermédiaire (5), et **en ce que** ces deux éléments sont en engagement mutuel sans contact.

8. Volant selon l'une au moins des revendications 5 à 7, **caractérisé en ce que** l'extrémité de l'élément de déformation (17) tournée en direction de la couronne (10) présente la forme d'une fourche (17a) dans laquelle s'engage un bord de la bague intermédiaire (18) de la bague intermédiaire (5).

9. Volant selon l'une au moins des revendications 5 à 8, **caractérisé en ce qu'**il est prévu quatre rayons de moyeu (4) agencés de façon symétrique et présentant le même écartement angulaire les uns des autres, et **en ce qu'**il est prévu quatre rayons de couronne (6 - 9) agencés symétriquement, parmi lesquels deux rayons (6, 7), en vue de dessus sur le volant et lorsque le volant se trouve dans la position de ligne droite, présentent dans la zone inférieure de la couronne au moins approximativement le même tracé que les rayons de moyeu (4), et **en ce que** les deux autres rayons (8, 9) s'étendent dans la zone supérieure du volant sous une forme plus plate que les rayons de moyeu.

10. Volant selon l'une au moins des revendications 5 à 9, **caractérisé en ce que** les rayons de moyeu (4) entre le moyeu (1, 2) du volant et la bague intermédiaire (5) s'étendent sous la forme d'un angle en L.

11. Volant selon l'une au moins des revendications précédentes,
**caractérisé en ce que** le module d'airbag (19) est fixé sur le composant (11) monté en rotation ou sur le poids (15).

12. Volant selon l'une au moins des revendications précédentes,
**caractérisé en ce que** le composant (11) monté en rotation est monté dans un palier à roulements (12).

13. Volant selon l'une au moins des revendications précédentes,
**caractérisé en ce que** le composant (11) monté en rotation comprend au moins une griffe (22), qui s'engage au-dessous d'une saillie de forme annulaire du moyeu de volant.

14. Volant selon l'une au moins des revendications précédentes,
**caractérisé en ce que** le moyeu de volant est formé d'une partie inférieure et d'une partie supérieure (1, 2) entre lesquelles sont fixés les rayons de moyeu (4).

15. Volant selon l'une au moins des revendications précédentes,
**caractérisé en ce que** le tronçon du palier, relié au moyeu (1, 2) de volant, pour le composant (11) monté en rotation, est relié au moyeu du volant via au moins un élément à effet ressort. (20).

16. Volant selon l'une au moins des revendications précédentes,
**caractérisé en ce que** le poids (15) est relié au composant (11) monté en rotation, via au moins un élément à effet ressort (21).
